# EUROPÄISCHE PATENTSCHRIFT

(11) **EP 1 581 757 B1**
(45) Veröffentlichungstag und Bekanntmachung des Hinweises auf die Patenterteilung: **24.05.2006**
(21) Anmeldenummer: 03815059.5
(22) Anmeldetag: 18.12.2003
(51) Int. Cl.: F16K 1/44

(54) **DOPPELSITZVENTIL**
DOUBLE-SEAT VALVE
SOUPAPE A SIEGE DOUBLE

(30) Priorität: 09.01.2003 DE 10300472
(43) Veröffentlichungstag der Anmeldung: 05.10.2005
(73) Patentinhaber: TUCHENHAGEN GmbH, 21514 Büchen (DE)
(72) Erfinder: COURA, Herbert, 21514 Büchen (DE); WIEDENMANN, Willi, 73469 Riesbürg (DE)
(74) Vertreter: Hauck, Graalfs, Wehnert, Döring, Siemons
(86) Internationale Anmeldenummer: PCT/EP2003/014505
(87) Internationale Veröffentlichungsnummer: WO 2004/063609

(56) Entgegenhaltungen:
- WO-A-93/16307
- DE-A- 19 842 603
- DE-U- 20 205 467
- DE-U- 29 923 799
- US-B1- 6 230 736

## Beschreibung

### TECHNISCHES GEBIET

Die Erfindung betrifft ein Doppelsitzventil, insbesondere Tankbodenventil, mit zwei seriell angeordneten, relativ zueinander bewegbaren Verschlussteilen nach dem Oberbegriff des Anspruchs 1.

### STAND DER TECHNIK

Ein Doppelsitzventil der gattungsgemäßen Art ist aus der **DE 42 03 723 C2** bekannt. Derartige Ventile kommen beispielsweise dann zur Anwendung, wenn das Raumangebot auf der dem Ventilantrieb abgewandten Seite des Ventils entweder begrenzt ist oder aber generell nicht zur Verfügung steht. Der letztgenannte Fall ist beispielsweise dann gegeben, wenn das in Rede stehende Doppelsitzventil als Tankbodenventil Verwendung findet und dabei die beiden Ventilstangen vorzugsweise senkrecht nach unten orientiert und durch das zugeordnete zweite Ventilgehäuseteil hindurch- und aus diesem herausgeführt sind. Der Tankboden bildet in diesem Falle das erste Ventilgehäuseteil.

Das bekannte Doppelsitzventil kann aber auch in waagrechter oder schräg liegender Anordnung eingebaut sein, wobei bei abwärts gerichteten Ventilstangen die Leckageflüssigkeit und/oder dem Leckagehohlraum zugeführtes Reinigungsmittel aus letzterem unter dem Einfluss der Schwerkraft eigenständig in die Umgebung des Ventils frei abfließen kann. Eine vollständige Restentleerung des Leckagehohlraumes bei waagrechter Einbaulage des Doppelsitzventils gelingt allerdings nur dann, wenn der Durchtrittsquerschnitt des Verbindungsweges zwischen dem Leckagehohlraum und dem Innenraum des Ablaufgehäuses, wie dies nach Anspruch 3 der **DE 42 03 723 C2** vorgesehen ist, derart bemessen ist, dass er näherungsweise dem Durchtrittsquerschnitt im Bereich der Ventilsitze entspricht.

In der **EP 0 625 250 B1** wird dieser Vorschlag aufgegriffen und konsequent weiterentwickelt (Figur 3). Die Ausführung gemäß Figur 3 macht deutlich, dass bei waagrechter Anordnung des Doppelsitzventils eine vollständige Restentleerung des Leckagehohlraumes dann gelingt, wenn das erste Verschlussteil mit radialen Dichtungsmitteln und das zweite Verschlussteil mit axialen Dichtungsmitteln ausgebildet sind, wobei das radiale Dichtungsmittel in der Schließstellung des Ventils in einer zylindrischen Sitzfläche dichtend Aufnahme findet und das axiale Dichtungsmittel am stirnseitigen Ende der Hohlstange angeordnet und einer senkrecht zur zylindrischen Sitzfläche orientierten Sitzfläche zugeordnet ist. Dabei ist die Hohlstange innenseits durchmessergleich mit der zylindrischen Sitzfläche ausgebildet und in der Schließstellung des Doppelsitzventils gehen der Innendurchmesser der Hohlstange und jener der zylindrischen Sitzfläche bündig ineinander über. Leckagefreies Schalten des Doppelsitzventils wird bei der vorliegenden Ausführungsform darüber hinaus dadurch erreicht, dass während der Öffnungsbewegung des unabhängig angetriebenen Verschlussteiles (Schieberkolben) dieses dichtend in der Hohlstange (Sitzteller) Aufnahme findet, bevor letztere ihre Sitzfläche verlässt.

Ein Doppelsitzventil, bei dem die Hohlstange des abhängig angetriebenen Verschlussteiles im Sinne der Anordnung gemäß Figur 3 der **EP 0 625 250 B1** ausgebildet ist, weist zwar eine wünschenswerte Vergrößerung des Verbindungsweges zwischen Leckagehohlraum und Umgebung des Doppelsitzventils auf, allerdings stellt die Hohlstange, wenn sie querschnittsmäßig durchgehend mit näherungsweise dem Durchtrittsquerschnitt im Bereich der Ventilsitze ausgebildet ist, im zugeordneten Ventilgehäuseteil, das sie durchdringt, ein Strömungshindernis dar. Eine durchgehend nahezu mit dem Durchtrittsquerschnitt des Doppelsitzventils ausgebildete Hohlstange erfüllt wiederum die Funktion eines sog. Druckausgleichkolbens, sodass der mit der Hohlstange verbundene Sitzteller in Schließ- und Öffnungsrichtung weitgehend frei bleibt von Strömungs- und Druckkräften aus dem im zugeordneten Ventilgehäuseteil anstehenden Fluid.

Um den einerseits wünschenswerten oder notwendigen Druckausgleich zu erhalten, andererseits jedoch Strömungsverluste im Ventilgehäuse nicht unnötig groß werden zu lassen, wurde bereits vorgeschlagen, die Hohlstange im Bereich zwischen einem Verschlussteil und einem Druckausgleichkolben einzuschnüren (s. beispielsweise **EP 0 039 319 B2).** Durch eine derartige Einschnürung wird allerdings eine vollständige Restentleerung des Leckagehohlraums bei waagrechtem oder schrägem Einbau des Doppelsitzventils verhindert. Es kommt zur Pfützenbildung im Sitzbereich, wobei Abhilfe dann nur durch zusätzliche Maßnahmen im Sinne der Ausführung gemäß Figur 2 der **EP 0 625 250 B1** zu schaffen ist.

Ein weiterer kritischer Bereich in Doppelsitzventilen der gattungsgemäßen Art ergibt sich dann, wenn die mit einem Druckausgleichkolben verbundene Hohlstange in einen Innenraum eines sich an das von ihr durchdrungene Ventilgehäuseteil anschließenden Ablaufgehäuses hineingeführt ist. Die großdimensionierte Hohlstange erfordert im Bereich ihrer Durchführung durch das zugeordnete Ventilgehäuseteil eine entsprechend große, dynamisch beanspruchte Dichtung. Dichtungen sind grundsätzlich kritische Bauteile, insbesondere dann, wenn sie einen großen Durchmesser aufweisen. Eine diesbezügliche Anordnung ist aus Figur 1, linke Seite, in der **EP 0 625 250 B1** ersichtlich.

Wird nun im vorstehenden Sinne die Hohlstange zur Verminderung des Strömungswiderstandes eingeschnürt, dann ergeben sich Reinigungsprobleme an der Abdichtung der Hohlstange in ihrem Durchdringungsbereich mit dem zugeordneten Ventilgehäuseteil. Die aus dem Leckagehohlraum über den Verbindungsweg zwischen der Hohlstange und der inneren Hohlstange abströmende Reinigungsflüssigkeit gelangt zwar in den Innenraum des Ablaufgehäuses, kann aber von dort den kritischen Dichtungsbereich nur dann beschwallen, wenn der gesamte Innenraum des Ablaufgehäuses geflutet würde. Eine derartige Flutung ist wiederum unerwünscht, da sie mit der Gefahr verbunden ist, dass sich im Innenraum des Ablaufgehäuses ein Überdruck aufbaut, sodass bei einem Defekt der Dichtung die Gefahr des Übertritts von Reinigungsflüssigkeit aus dem Ablaufgehäuse in das benachbarte Ventilgehäuseteil besteht. Wird durch entsprechende Dimensionierung der Zu- und Ablaufquerschnitte eine derartige Flutung des Ablaufgehäuses verhindert, dann tritt die Reinigungsflüssigkeit vorzugsweise in der Umgebung der inneren Hohlstange in den Innenraum des Ablaufgehäuses aus, sodass wiederum eine Umlenkung nach außen in den wiederum eine Umlenkung nach außen in den kritischen Dichtungsbereich des Druckausgleichkolbens nicht gegeben ist.

Um eine Reinigung des fraglichen kritischen Bereichs dennoch sicherzustellen, werden in der **DE 42 03 723 C2** und auch in der **EP 0 625 250 B1** Durchtrittsöffnungen in der inneren Hohlstange vorgeschlagen, die als Spritzdüsen ausgebildet sind und die den innenseitigen Ringspalt zwischen der inneren Hohlstange und der Ventilstange für das unabhängig angetriebene Verschlussteil mit dem außenseitigen Verbindungsweg zwischen der inneren Hohlstange und der Hohlstange verbinden und dabei in axialer Richtung derart positioniert sind, dass das aus diesen Spritzdüsen austretende Reinigungsmittel auf den kritischen Dichtungsbereich gerichtet ist. Eine derartige Lösung ist allerdings nur dann möglich, wenn Reinigungsmittel aus der Umgebung des Doppelsitzventils dem Ringspalt zugeführt wird. Bei einer Sitzreinigung des Doppelsitzventils, d.h. wenn Reinigungsmittel durch Teilhub des ersten oder des zweiten Verschlussteiles aus dem jeweils zugeordneten Ventilgehäuseteil über die freigelegte Sitzfläche dem Leckagehohlraum zugeführt wird, ist eine gezielte Beschwallung des kritischen Dichtungsbereiches im vorstehend dargestellten Sinne über die Spritzdüsen nicht möglich.

Aus der **DE 299 23 799 U1** ist ein Doppelsitzventil mit spülfähiger Ventilstangendurchführung am Ventilgehäuse bekannt, das bei domfreier Ausbildung des Ventilgehäuses im Durchdringungsbereich mit der Ventilstange eine restlos entleerbare, spülfähige Ventilstangendurchführung aufweist. Dies wird dadurch sichergestellt, dass die Ventilstange bei der Öffnungsbewegung des Ventils an ihrer Abdichtungsstelle mit dem jeweiligen Ventilgehäuse eine aus letzterem herausführende Hubbewegung ausführt, und dass in der Schließstellung des Ventils der Ringraum in unmittelbarer Nähe zu einer die Ventilstange gegenüber dem zugeordneten Ventilgehäuse abdichtenden Stangendichtung über wenigstens eine innerhalb der Ventilstange ausgebildete Drainageleitung unmittelbar oder mittelbar mit dem Leckagehohlraum verbunden ist.

In der **DE 41 18 874 C2** sind ein Verfahren und eine Ventilvorrichtung zur Reinigung eines leckagefrei schaltenden Doppelsitzventils beschrieben, die insbesondere die Durchdringungsbereiche der relativ groß dimensionierten Stangen der Schließglieder durch das jeweils zugeordnete Ventilgehäuse mit minimalem, ökonomischem und nicht zuletzt umweltschonenden Einsatz von Reinigungs- und/oder Desinfektionsmittel sicherstellen. Dies wird verfahrenstechnisch dadurch erreicht, dass durch einen Teilhub der Schließglieder eine Durchführung freigegeben wird, die von einem ersten Ventilgehäuseteil abzweigt und durch die ein Reinigungsmittelstrom hindurchtritt, welcher, beginnend an der Abzweigungsstelle und von oben nach unten, die Durchführung zwischen einer Betätigungsstange des Schließgliedes und dem Gehäuse, den Leckagehohlraum mit dem zugänglich gemachten Sitzbereich des Ventils und die andere Durchführung reinigt.

Der vorstehend dargestellte Sachverhalt macht deutlich, dass sämtliche wünschenswerten Maßnahmen an einem Doppelsüzventil der gattungsgemäßen Art nicht realisierbar sind. Es muss im Einzelfalle die Entscheidung getroffen werden, welches Kriterium unabdingbar zu erfüllen ist und welches eine nachrangige Bedeutung besitzt. Ist beispielsweise der Ablaufquerschnitt aus dem Leckagehohlraum über den Verbindungsweg nicht kritisch, dann lässt sich die Forderung nach einem weitgehenden Druckausgleich am abhängig angetriebenen Verschlussteil mit der Forderung nach einem möglichst geringen Strömungswiderstand durch Einschnürung der Hohlstange verbinden. Die Verwirklichung der Einschnürung verhindert allerdings bei waagrechter oder schräger Einbaulage des Doppelsitzventils die vollständige Restentleerung des Leckagehohlraumes. Darüber hinaus entstehen wiederum reinigungskritische Bereiche an der zwangsläufig groß dimensionierten Abdichtung gegenüber dem Druckausgleichkolben, da die Reinigungsflüssigkeit durch die Hohlstangeneinschnürung dem Innenraum des Ablaufgehäuses bevorzugt im Bereich der inneren Hohlstange, d.h. eher im Zentrum als im Außenbereich, zuströmt und nur schwerlich an die reinigungskritischen Außenbereiche umlenkbar ist.

Es ist Aufgabe der vorliegenden Erfindung, ein Doppelsitzventil der gattungsgemäßen Art derart weiterzuentwickein, dass sein abhängig angetriebenes Verschlussteil weitgehend druckausgeglichen, mit geringem Strömungswiderstand und in seinen reinigungskritischen Bereichen gut reinigbar ausgestaltet ist.

### ZUSAMMENFASSUNG DER ERFINDUNG

Die Aufgabe wird durch ein Doppelsitzventil, insbesondere Tankbodenventil, mit den Merkmalen des Anspruchs 1 gelöst. Vorteilhafte Ausführungsformen des vorgeschlagenen Doppelsitzventils gemäß der Erfindung sind Gegenstand der Unteransprüche.

Die Ausbildung der Hohlstange im Durchdringungsbereich mit dem zugeordneten Ventilgehäuseteil als Druckausgleichkolben verwirklicht einen angestrebten Druckausgleich am abhängig angetriebenen Verschlussteil. Die Verminderung des Strömungswiderstandes durch Einschnürung der Hohlstange im Bereich zwischen dem zweiten Verschlussteil und dem Druckausgleichkolben führt, in radialer Richtung gesehen, zu einer zwangsläufigen Verlagerung des Verbindungsweges zwischen dem Leckagehohlraum und dem Innenraum des Ablaufgehäuses aus dem Außen- in den Umfangsbereich der inneren Hohlstange. Dass dennoch eine optimale Reinigung des kritischen Dichtungsbereiches am Umfang des Druckausgleichkolbens sichergestellt ist, wird dadurch erreicht, dass der Verbindungsweg, ausgehend vom Leckagehohlraum, erfindungsgemäß am Umfang des Druckausgleichkolbens und im Innenraum des Ablaufgehäuses ausmündet.

Einen nahezu vollständigen Druckausgleich am abhängig angetriebenen Verschlussteil ist gemäß einer vorteilhaften Ausführungsform dann erreicht, wenn der Druckausgleichkolben annähernd einen dem Durchtrittsquerschnitt zwischen den Ventilgehäuseteilen entsprechenden sog. Balancerquerschnitt aufweist.

Wird, wie dies eine weitere Ausgestaltung vorsieht, die Hohlstange im Bereich zwischen dem zweiten Verschlussteil und dem Druckausgleichkolben auf einen den Festigkeitserfordernissen entsprechenden Mindestquerschnitt eingeschnürt, dann lässt sich der Verbindungsweg zwischen dem Leckagehohlraum und dem Innenraum des Ablaufgehäuses in den unmittelbaren Umfangsbereich der inneren Hohlstange verlagern.

Ein weiterer Vorschlag sieht vor, dass der Verbindungsweg von einem ersten und einem sich anschließenden zweiten Abschnitt gebildet wird, und dass sich der erste Abschnitt innerhalb eines durch die Hohlstange vorgegebenen Bereichs überwiegend axial und der zweite Abschnitt überwiegend radial erstrecken. Die Orientierung des zweiten Abschnittes, in radialer Richtung gesehen, nach außen schafft die Möglichkeit, das aus dem Leckagehohlraum abströmende Reinigungsmittel dem Außenbereich des Druckausgleichkolbens zuzuführen, und zwar ganz gezielt in dessen kritischen Dichtungsbereich. Naheliegend und durch den Stand der Technik vorgezeichnet ist demgegenüber ein Austritt des Verbindungsweges, in axialer Verlängerung desselben, in den Innenraum des Ablaufgehäuses, und zwar im Wesentlichen parallel zur inneren Hohlstange verlaufend.

Zur Realisierung des erfindungsgemäßen Verlaufs des zweiten Abschnitt des Verbindungsweges wird gemäß einer vorteilhaften Ausgestaltung vorgeschlagen, dass der zweite Abschnitt auf Seiten der inneren Hohlstange von einem an dieser angeformten, umlaufenden radialen Vorsprung berandet wird. Dieser radiale Vorsprung erstreckt sich dabei, damit ein Ausmünden des zweiten Abschnitts am Umfang des Druckausgleichkolbens sichergestellt ist, bis nahe an die innere Umfangsfläche des Innenraums heran.

Die Notwendigkeit der besonderen räumlichen Ausgestaltung des ersten und zweiten Abschnittes des Verbindungsweges erfordert eine entsprechende Konturierung der Hohlstange und der inneren Hohlstange, die miteinander verbunden sein müssen, da sie beide zum zweiten Schließglied gehören, das das zweite Verschlussteil trägt. Die notwendige Verbindung beider gestaltet sich gemäß einem weiteren Vorschlag dann besonders einfach, wenn diese Verbindung mittels am Umfang des Druckausgleichkolbens angeordnete, den Austrittsbereich des zweiten Abschnittes bis zum äußeren Ende des radialen Vorsprungs überbrückende Verbindungsstege erfolgt. Die Verbindungsstege sind an der vorstehend erwähnten Position relativ leicht spanabhebend anzuformen und dort vorzugsweise stoffschlüssig mit dem radialen Vorsprung zu verbinden.

Eine möglichst gleichmäßige Abströmung der Reinigungsflüssigkeit aus dem zweiten Abschnitt des Verbindungsweges wird dadurch erreicht, wie dies eine andere Ausgestaltung vorsieht, wenn die Verbindungsstege gleichmäßig über dem Umfang des Druckausgleichkolbens verteilt angeordnet und im Wesentlichen axial orientiert sind. Dabei wird, wie dies ebenfalls vorgeschlagen wird, mit drei Verbindungsstegen einerseits eine strömungsgünstige Verteilung des in Frage kommenden Reinigungsmittel- und/oder Leckagestromes und andererseits eine den Festigkeitserfordernissen Rechnung tragende Stabilität der Schließglied-Anordnung sichergestellt.

Um eine einwandfreie Reinigung des kritischen Dichtungsbereichs der Hohlstange bzw. des Druckausgleichkolbens sicherzustellen, sieht eine weitere Ausführungsform vor, dass sich die Verbindungsstege, insgesamt gesehen, über 35 bis 40 Prozent des Umfangs des Druckausgleichkolbens erstrecken.

Der reinigungskritische Bereich der Durchführung der Hohlstange durch das Ventilgehäuseteil befindet sich bekanntlich unmittelbar hinter ihrer Durchdringungsstelle im Bereich des Innenraumes des Ablaufgehäuses. Da das Reinigungsmittel bestimmungsgemäß am Umfang des Druckausgleichkolbens in den Innenraum des Ablaufgehäuses austritt, der zweite Abschnitt des Verbindungsweges im Endbereich jedoch, konstruktiv bedingt, innenraumseitig vom radialen Vorsprung begrenzt wird, muss das Reinigungsmittel auf seinem Weg vom Austritt aus dem Druckausgleichkolben bis in den Innenraum des Ablaufgehäuses noch einen durch die axiale Erstreckung des radialen Vorsprunges bestimmten Strömungsweg zurücklegen. Die Sicherstellung des hierzu notwendigen Abflussquerschnittes wird gemäß einem weiteren Vorschlag dadurch erreicht, dass der radiale Vorsprung in radialer Richtung derart bemessen ist, dass zwischen ihm und einer umschließenden ihren Umfangsfläche des Innenraumes ein zu letzterem hinführender Abflussringspalt gebildet wird. Durch die fast 90 Grad betragende Umlenkung des Reinigungsmittelstromes vom Austrittsbereich des zweiten Abschnitt des Verbindungsweges in den vorstehend erwähnten Abflussringspalt wird im Außenbereich dieser Umlenkung das Reinigungsmittel ganz gezielt auch an den besonders reinigungskritischen Dichtungsspalt zwischen Ventilgehäuseteil und Druckausgleichkolben herangeführt.

Eine weitere Ausführungsform des Doppelsitzventils gemäß der Erfindung sieht vor, dass die innere Hohlstange aus dem Ablaufgehäuse herausgeführt und ein zwischen der inneren Hohlstange und der Ventilstange gebildeter Ringspalt außerhalb des Ablaufgehäuses in der Umgebung des Ventils mit einem Anschluss für die Zufuhr eines dritten Reinigungsmittelstromes ausgestattet ist. Durch diese Maßnahme lässt sich das erfindungsgemäße Doppelsitzventil sowohl in der Schließ- als auch in der Offenstellung seiner Verschlussteile mit von außerhalb des Doppelsitzventils herangeführtem Reinigungsmittel reinigen. Die Reinigung des Leckagehohlraumes in der Schließstellung des Doppelsitzventils durch spaltweites Entfernen einer der beiden Verschlussteile (sog. Sitzreinigung) von der zugeordneten Sitzfläche ist in jedem Falle gegeben, unabhängig vom Vorhandensein der externen Reinigungsmittelzufuhr auf dem Weg über den vorstehend erwähnten Anschluss.

Die Sitzreinigung des unabhängig angetriebenen ersten Verschlussteiles wird gemäß einem weiteren Vorschlag dadurch erreicht, dass dieses über seine Ventilstange mit einem ersten Einzelverstellkolben in einem zweiten Antriebsteil des Ventilantriebs verbunden ist. Dies setzt notwendigerweise voraus, dass der Ventilantrieb, dem auch die Realisierung des vollen Öffnungshubes obliegt, über sog. Einzelverstelleinrichtungen verfügt, die im zweiten Antriebsteil angeordnet sind.

Um auch das abhängig angetriebene zweite Verschlussteil durch Teilhubbewegung in eine Sitzreinigungsstellung überführen zu können, wird weiter vorgeschlagen, dass die innere Hohlstange bis in den Ventilantrieb verlängert und dort mit einem zweiten Einzelverstellkolben in dem zweiten Antriebsteil in einen Verstelleingriff zu bringen ist.

Ein mit den vorstehend dargestellten Merkmalen ausgestattetes Doppelsitzventil ist demnach im jeweiligen Sitzbereich seiner beiden Verschlussteile sitzreinigungsfähig und darüber hinaus ist der Leckagehohlraum sowohl in der Schließals auch in der Offenstellung des Doppelsitzventils mit Reinigungsmittel, das von außerhalb des Doppelsitzventils über den Anschluss heranführbar ist, reinigbar. Das abhängig angetriebene zweite Verschlussteil ist druckausgeglichen, sein Strömungswiderstand ist durch Einschnürung der Hohlstange reduziert bzw. minimiert und der reinigungskritische Dichtungsbereich an der Durchdringungsstelle des Druckausgleichkolbens mit dem zugeordneten Ventilgehäuseteil lässt sich durch die erfindungsgemäße Ausgestaltung des Verbindungsweges zwischen Leckagehohlraum und Innenraum des Ablaufgehäuses einwandfrei reinigen.

### KURZBESCHREIBUNG DER ZEICHNUNGEN

Ein Ausführungsbeispiel der Erfindung ist in der Zeichnung dargestellt und wird nachfolgend beschrieben. Es zeigen
- **Figur 1**: einen Mittelschnitt durch ein als Tankbodenventil ausgestaltetes Doppelsitzventil gemäß der Erfindung und
- **Figur 2**: in perspektivischer Darstellung das abhängig angetriebene zweite Schließglied, wie es im Tankbodenventil gemäß Figur 1 zur Anwendung kommt.

### BEZUGSZEICHENLISTE DER VERWENDETEN ABKÜRZUNGEN

- 1: Ventilgehäuse
- 1a: erstes Ventilgehäuseteil (Tankboden)
- 1b: zweites Ventilgehäuseteil
- 1c: Anschlussstutzen
- 2: Sitzring
- 2a: erste Sitzfläche (zylindrische Bohrung)
- 2b: zweite Sitzfläche
- 3: Leckagehohlraum
- 4: Ablaufgehäuse
- 4a: Innenraum
- 4b: Anschlussrohr
- 4c: innere Umfangsfläche
- 4d: Bodenfläche
- 50: erstes Schließglied (Ventilteller)
- 5: erstes Verschlussteil (Schieberkolben)
- 5a: (erste) Ventilstange
- 60: zweites Schließglied (Doppelteller)
- 6: zweites Verschlussteil (Sitzteller)
- 6a: Hohlstange
- 6b: Druckausgleichkolben (Balancer)
- 6c: innere Hohlstange (zweite Ventilstange)
- 6d: Verbindungssteg
- 6e: erster Abschnitt des Verbindungsweges
- 6f: zweiter Abschnitt des Verbindungsweges
- 6g: radialer Vorsprung
- 6h: Abflussringspalt
- 7: Ringspalt
- 8: Laternengehäuse
- 9: Düseneinsatz
- 10: Verbindungsmittel
- 11: erste Hohlstangendichtung
- 12: zweite Hohlstangendichtung
- 13: erster Führungsring
- 14: zweiter Führungsring
- 15: Gehäusedichtung
- 16: erste Sitzdichtung (Radialdichtung)
- 17: zweite Sitzdichtung (Radial-Axial-Dichtung)
- 18: Leckageraumdichtung (Axialdichtung)
- 19: Anschluss für Zufuhr eines Reinigungs- und/oder Spülmittels
- 20: Ventilantrieb
- 20.1: erster Antriebsteil
- 20.1 a: erster Antriebskolben
- 20.2: zweiter Antriebsteil
- 20.2a: erster Einzelverstellkolben (zweiter Antriebskolben)
- 20.2b: zweiter Einzelverstellkolben
- a_{M}: Mindestquerschnitt
- A_{B}: Balancerquerschnitt
- A_{N}: Durchtrittsquerschnitt
- D1: erster Druckmittelstrom
- D1*: alternativer erster Druckmittelstrom
- D2: zweiter Druckmittelstrom
- D3: dritter Druckmittelstrom
- R: abfließender Reinigungsmittelstrom
- R1: erster Reinigungsmittelstrom (aus Sitzreinigung des ersten Verschlussteiles)
- R2: zweiter Reinigungsmittelstrom (aus Sitzreinigung des zweiten Verschlussteiles)
- R3: dritter Reinigungsmittelstrom (externe Reinigungsmittelzufuhr)

### DETAILLIERTE BESCHREIBUNG

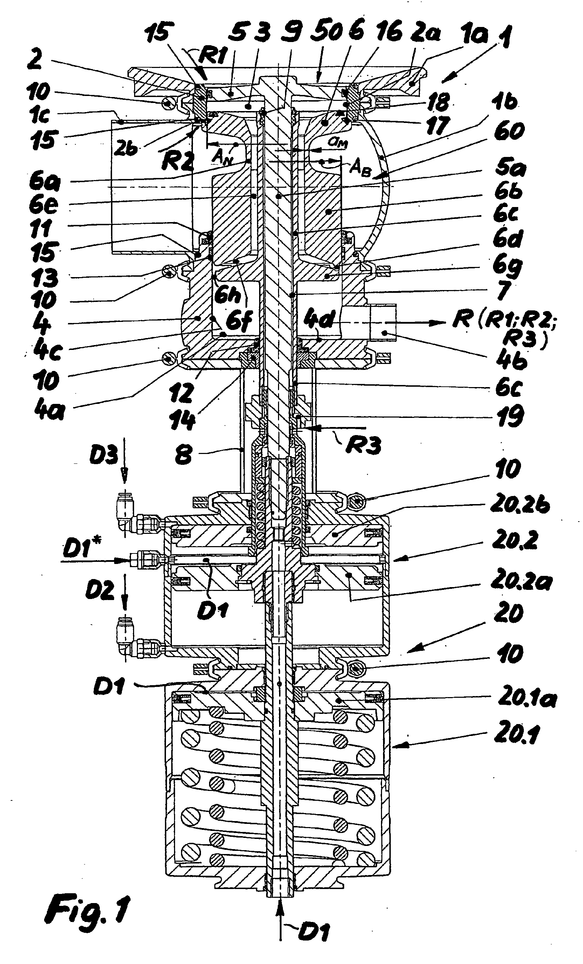

Ein als Tankbodenventil zur Anwendung kommendes Doppelsitzventil ist in einer Einbaulage gezeigt (**Figur 1**), in der die beiden zu einem aus einem ersten und einem zweiten Antriebsteil 20.1, 20.2 bestehenden Ventilantrieb 20 führenden Ventilstangen 5a, 6c senkrecht nach unten orientiert sind. Ein Ventilgehäuse 1 besteht aus einem ersten und einem zweiten Ventilgehäuseteil 1a bzw. 1b. Während das zweite Ventilgehäuseteil 1b über einen Anschlussstutzen 1c beispielsweise mit einer nicht dargestellten Rohrleitung verbunden ist, ist das erste Ventilgehäuseteil 1a in der hier gezeigten Tankbodenventil-Ausführung Teil eines nicht dargestellten Tankbodens. An das zweite Ventilgehäuseteil 1b schließt sich unterhalb ein Ablaufgehäuse 4 an, dessen Innenraum 4a umfangsseits von einer inneren Umfangsfläche 4c und am stirnseitigen unteren Ende von einer Bodenfläche 4d begrenzt wird. Ein Anschlussrohr 4b verbindet den Innenraum 4a mit der Umgebung des Doppelsitzventils. Im Verbindungsbereich des ersten und des zweiten Ventilgehäuseteils 1a, 1b ist ein Sitzring 2 angeordnet, der über eine als zylindrische Bohrung ausgeführte erste Sitzfläche 2a in Verbindung mit einem als Schieberkolben ausgebildeten ersten Verschlussteil 5 und eine in Form einer konischen Mantelfläche ausgebildete zweite Sitzfläche 2b in Verbindung mit einem als Sitzteller ausgeführten zweiten Verschlussteil 6 den Sitzbereich des Doppelsitzventils bildet.

Das erste Verschlussteil 5 und die mit ihm verbundene Ventilstange 5a bilden zusammen ein erstes Schließglied 50, und das zweite Verschlussteil 6 und ein mit diesem über eine Hohlstange 6a verbundener Druckausgleichkolben 6b, der wiederum über Verbindungsstege 6d mit einem radialen Vorsprung 6g der als innere Hohlstange 6c ausgeführten (zweiten) Ventilstange verbunden ist, bilden ein zweites Schließglied 60 (sog. Doppelteller). Das erste Verschlussteil 5 ist umfangsseits mit einer ersten Sitzdichtung 16 ausgestattet, die als sog. Radialdichtung mit der als zylindrische Bohrung ausgeführten ersten Sitzfläche 2a zusammenwirkt. Das zweite Verschlussteil 6 verfügt über eine zweite Sitzdichtung 17, die als sog. Radial-Axial-Dichtung mit der als konische Mantelfläche ausgebildeten zweiten Sitzfläche 2b korrespondiert. Ein zwischen dem ersten Verschlussteil 5 und dem zweiten Verschlussteil 6 gebildeter Leckagehohlraum 3 wird in der Offenstellung des Doppelsitzventils gegenüber dem ihn umschließenden Ventilinnenraum mittels einer Leckageraumdichtung 18 abgedichtet, die als reine Axial-dichtung wirkt und innerhalb der dem Leckagehohlraum 3 zugewandten Stirnfläche des zweiten Verschlussteils 6 angeordnet ist.

Prinzipiell lassen sich die beiden Schließglieder 50, 60 auch jeweils mit einem Schieberkolben ausbilden; auch eine Ausgestaltung mit jeweils einem Sitzteller ist möglich. Mit der in **Figur 1** dargestellten Ausführungsform (Schieberkolben und Sitzteller) ist näherungsweise sog. leckagefreies Schalten möglich, wenn man davon absieht, dass beim Schließvorgang des Doppelsitzventils, und zwar im Raum radial außerhalb der Leckageraumdichtung 18, die sich dabei in Kontakt mit dem anliegenden ersten Verschlussteil 5 befindet, und bis hin zum Sitzring 2, eine geringe Menge Schaltleckage bei jedem Schaltvorgang in den durch die vorstehend erwähnten Bauteile umgrenzten Raum eingeschlossen wird.

Die vorgenannten Schließgliedkonfigurationen haben Auswirkungen auf die hierfür notwendige Ausgestaltung des Ventilantriebes 20. Im Ausführungsbeispiel gemäß **Figur 1** wird der Öffnungshub des Doppelsitzventils durch einen ersten Antriebskolben 20.1a im ersten Antriebsteil 20.1 in Verbindung mit einem ersten Einzelverstellkolben 20.2a im zweiten Antriebsteil 20.2 generiert, wobei letzterer eine Doppelfunktion besitzt und im vorliegenden Fall als zusätzlicher zweiter Antriebskolben für den Öffnungshub fungiert. Das hierfür notwendige Druckmittel wird als erster Druckmittelstrom D1 einer nicht näher bezeichneten Verlängerung der Ventilstange 5a innenseits zugeführt und verzweigt sich zum einen in den ersten Antriebsteil 20.1 und beaufschlagt dort den ersten Antriebskolben 20.1 a und zum andern in den zweiten Antriebsteil 20.2, um dort den ersten Einzelverstellkolben 20.2a in seiner Funktion als zweiter Antriebskolben in Öffnungsrichtung zu beaufschlagen. Alternativ hierzu kann ein alternativer erster Druckmittelstrom D1* zunächst dem zweiten Antriebsteil 20.2 von außen derart zugeführt werden, dass dieser Druckmittelstrom D1* den ersten Einzelverstellkolben 20.2a beaufschlagt und parallel hierzu, in umgekehrter Richtung, wie vorstehend beschrieben, auch zum ersten Antriebsteil 20.1 a im ersten Antriebsteil 20.1 gelangt.

Zum Zwecke der Sitzreinigung des ersten Verschlussteils 5 wird dieses so weit in Richtung des Tankinnenraumes verschoben, dass zwischen dem ersten Verschlussteil 5 und der ersten Sitzfläche 2a (zylindrische Bohrung) ein Spalt entsteht, über den ein erster Reinigungsmittelstrom R1 aus dem ersten Ventilgehäuseteil 1a an die freigelegte erste Sitzfläche 2a herangeführt werden kann, um von dort dem Leckagehohlraum 3 zuzuströmen. Zur Realisierung der notwendigen Teilhubbewegung des ersten Verschlussteils 5 wird der erste Einzelverstellkolben 20.2a, bezogen auf die Darstellungslage, auf seiner Unterseite mit einem zweiten Druckmittelstrom D2 beaufschlagt, sodass der erste Einzelverstellkolben 20.2a nunmehr in seiner diesbezüglichen zweiten Funktion wirksam werden kann.

Zum Zwecke der Sitzreinigung des zweiten Verschlussteils 6 wird letzteres spaltweit von seiner zugeordneten zweiten Sitzfläche 2b mittels eines Teilhubes angehoben. Diese Teilhubbewegung wird dadurch generiert, dass die bis in das zweite Antriebsteil 20.2 hineingeführte innere Hohlstange 6c mit einem in diesem angeordneten zweiten Einzelverstellkolben 20.2b in einen Verstelleingriff gebracht wird. Hierzu wird der zweite Einzelverstellkolben 20.2b durch Beaufschlagung mit einem dritten Druckmittelstrom D3 auf der inneren Hohlstange 6c ein Stück weit axial verschoben, bis er an dieser an einem nicht näher bezeichneten Rezess zur Anlage kommt und im weiteren axialen Verlauf zusammen mit dieser die notwendige begrenzte Teilhubbewegung ausführt.

Unterhalb des Ablaufgehäuses 4 ist ein Laternengehäuse 8 angeordnet, welches eine Verbindung zu dem Ventilantrieb 20 bildet. Die Verbindung der beiden Ventilgehäuseteile 1a und 1b, jene zwischen dem zweiten Ventilgehäuseteil 1b und dem Ablaufgehäuse 4, jene zwischen letzterem und dem Laternengehäuse 8, jene zwischen letzterem und dem zweiten Antriebsteil 20.2 und schließlich jene zwischen letzterem und dem ersten Antriebsteil 20.1 werden jeweils über form- und kraftschlüssig wirkende Verbindungsmittel 10 realisiert (beispielsweise sog. Spannringe in Verbindung mit Klemmflanschen). Sowohl die Ventilstange 5a als auch die innere Hohlstange 6c greifen durch das Ablaufgehäuse 4 und das Laternengehäuse 8 hindurch und sind bis in den Ventilantrieb 20 geführt.

Das zweite Verschlussteil 6 ist über die Hohlstange 6a mit dem Druckausgleichkolben 6b verbunden, wobei die Hohlstange 6a im Bereich zwischen dem zweiten Verschlussteil 6 und dem Druckausgleichkolben 6b auf einen den Festigkeitserfordernissen entsprechenden Mindestquerschnitt a_{M} eingeschnürt ist. Der Druckausgleichkolben 6b, der durchgängig einen dem Durchtrittsquerschnitt AN zwischen den Ventilgehäuseteilen 1a, 1b entsprechenden Balancerquerschnitt A_{B} aufweist, durchdringt das zweite Ventilgehäuseteile 1b, endet im Innenraum 4a des Ablaufgehäuses 4 und ist im Bereich seiner Durchdringung mit dem zweiten Ventilgehäuseteil 1b über eine erste Hohlstangendichtung 11 abgedichtet und in einem sich an letzere anschließenden ersten Führungsring 13 geführt. In gleicher Weise ist die innere Hohlstange 6c im Bereich ihrer Durchdringung mit dem Ablaufgehäuse 4 über eine zweite Hohlstangendichtung 12 abgedichtet und einen zweiten Führungsring 14 geführt. Die Abdichtung zwischen dem Sitzring 2 und den benachbarten Ventilgehäuseteilen 1a und 1b besorgen Gehäusedichtungen 15; in gleicher Weise wird über eine weitere Gehäusedichtung 15 das in einen nicht näher bezeichneten Anschlussstutzen des zweiten Ventilgehäuseteils 1b eingreifende Ablaufgehäuse 4 abgedichtet.

Innerhalb der Hohlstange 6a und dem sich anschließenden Druckausgleichkolben 6b ist die innere Hohlstange 6c angeordnet, die sich unterhalb des Druckausgleichkolbens 6b in den umlaufenden radialen Vorsprung 6g erweitert. Die Hohlstange 6a und der anschließende Druckausgleichkolben 6b einerseits und die innere Hohlstange 6c in Verbindung mit dem radialen Vorsprung 6g andererseits begrenzen einen Verbindungsweg 6e, 6f, der, ausgehend vom Leckagehohlraum 3, von dem ersten Abschnitt 6e und dem sich anschließenden zweiten Abschnitt 6f gebildet wird. Der erste Abschnitt 6e erstreckt sich innerhalb eines durch die Hohlstange 6a vorgegebenen Bereichs überwiegend axial und in diesem Verlauf außenseits begrenzt durch den Mindestquerschnitt a_{M}. Der zweite Abschnitt 6f erstreckt sich überwiegend radial, wobei er am Umfang des Druckausgleichkolbens 6b im Innenraum 4a des Ablaufgehäuses 4 ausmündet. Dabei wird der zweite Abschnitt 6f auf Seiten der inneren Hohlstange 6c von dem an dieser angeformten, umlaufenden radialen Vorsprung 6g berandet.

Die Verbindung des Druckausgleichkolbens 6b und damit der Hohlstange 6a mit der inneren Hohlstange 6c erfolgt mittels der Verbindungsstege 6d, die am Umfang des Druckausgleichkolbens 6b angeordnet sind und den Austrittsbereich des zweiten Abschnittes 6f bis zum äußeren Ende des radialen Vorsprungs 6g überbrücken. Die Verbindungsstege 6d sind vorzugsweise gleichmäßig über den Umfang des Druckausgleichkolbens 6b verteilt angeordnet und im Wesentlichen axial orientiert. Es sind vorzugsweise drei Verbindungsstege 6d vorgesehen, die sich, insgesamt gesehen, über 35 bis 40 Prozent des Umfangs des Druckausgleichkolbens 6b erstrecken. Der radiale Vorsprung 6g ist in radialer Richtung derart bemessen, dass zwischen ihm und der umschließenden inneren Umfangsfläche 4c des Innenraumes 4a ein zu letzterem hinführender Abflussringspalt 6h gebildet wird.

Die innere Hohlstange 6c endet im Bereich des Überganges zwischen dem zweiten Verschlussteil 6 und seiner Hohlstange 6a und trägt dort einen Düseneinsatz 9, der in der inneren Hohlstange 6c vorzugsweise formschlüssig befestigt ist und der zwei Funktionen erfüllt, nämlich eine Führungsfunktion für die Ventilstange 5a innerhalb der inneren Hohlstange 6c und eine Düsenfunktion für einen ggf. in einen Ringspalt 7 zwischen Ventilstange 5a und innerer Hohlstange 6c eingeleiteten dritten Reinigungsmittelstrom R3. Letzterer wird dem Ringspalt 7 außerhalb des Ablaufgehäuses 4 in der Umgebung des Doppelsitzventils über einen Anschluss 19 zugeführt.

Die Reinigung des Leckagehohlraums 3 sowie des Durchdringungsbereichs zwischen dem zweiten Ventilgehäuse 1b und dem Druckausgleichkolben 6b erfolgt entweder durch externe Zufuhr des dritten Reinigungsmittelstromes R3 über den Anschluss 19 oder aber durch die Überführung des ersten oder des zweiten Verschlussteils 5 bzw. 6 in die jeweilige Sitzreinigungsstellung. Bei der externen Zufuhr des Reinigungsmittelstromes R3 über den Anschluss 19 gelangt dieser über den Ringspalt 7 und den Düseneinsatz 9 in den Leckagehohlraum 3, um von dort über den ersten Abschnitt 6e, den sich anschließenden zweiten Abschnitt 6f und den Abflussringspalt 6h dem Innenraum 4a des Ablaufgehäuses 4 zuzuströmen. Von dort wird das Reinigungsmittel dann über das Anschlussrohr 4b als abfließender Reinigungsmittelstromes R abgeführt. Den gleichen Weg, wie vorstehend beschrieben, nehmen auch der durch Sitzreinigung am ersten Verschlussteil 5 geerntete erste Reinigungsmittelstrom R1 und ebenfalls ein durch Sitzreinigung des zweiten Verschlussteils 6 aus dem zweiten Ventilgehäuseteil 1b herangeführter zweiter Reinigungsmittelstrom R2 sowie im Leckagehohlraum 3 ggf. anfallende Schaltleckagen.

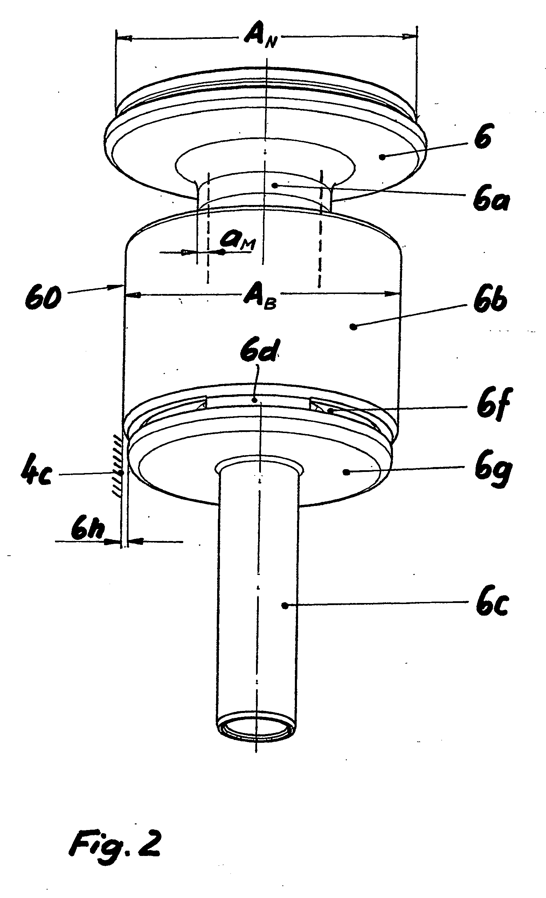

Die die vorliegende Erfindung im Wesentlichen kennzeichnenden Merkmale sind aus der perspektivischen Darstellung des zweiten Schließgliedes 60 in Figur 2 ersichtlich. Man erkennt, dass die Hohlstange 6a im Durchdringungsbereich mit dem zweiten Ventilgehäuseteil 1b (vergleiche auch **Figur 1**) als Druckausgleichkolben 6b ausgebildet ist, der annähernd den dem Durchtrittsquerschnitt AN zwischen den Ventilgehäuseteilen 1a, 1b entsprechenden Balancerquerschnitt A_{B} aufweist. Weiterhin ist ersichtlich, dass die Hohlstange 6a im Bereich zwischen dem zweiten Verschlussteil 6 und dem Druckausgleichkolben 6b auf einen den Festigkeitserfordernissen entsprechenden Mindestquerschnitt a_{M} eingeschnürt ist.

Darüber hinaus wird in besonderer Weise deutlich, dass der zweite Abschnitt 6f des Verbindungsweges 6e, 6f am Umfang des Druckausgleichkolbens 6b ausmündet und dass die Verbindung der Hohlstange 6a mit der inneren Hohlstange 6c mittels der Verbindungsstege 6d erfolgt, die am Umfang des Druckausgleichkolbens 6b angeordnet sind und den Austrittsbereich des zweiten Abschnittes 6f bis zum äußeren Ende des radialen Vorsprungs 6g überbrücken. Die Verbindungsstege 6d sind gleichmäßig über den Umfang des Druckausgleichkolbens verteilt angeordnet und im Wesentlichen axial orientiert, wobei sie sich, insgesamt gesehen, über 35 bis 40 Prozent des Umfangs des Druckausgleichkolbens 6b erstrecken. Des weiteren ist am unteren Ende des Druckausgleichkolbens 6b erkennbar, dass der radiale Vorsprung 6g in radialer Richtung derart bemessen ist, dass im Einbauzustand des zweiten Schließgliedes 60 zwischen dem radialen Vorsprung 6g und der diesen umschließenden inneren Umfangsfläche 4c des Innenraumes 4a der zu letzterem hinführende Abflussringspalt 6h gebildet wird.

## Patentansprüche

1. Doppelsitzventil mit zwei seriell angeordneten, relativ zueinander bewegbaren Verschlussteilen (5, 6), die sowohl in der Schließ- als auch in der Offenstellung des Ventils einen Leckagehohlraum (3) begrenzen, der mit der Umgebung des Ventils verbunden ist, mit dem unabhängig angetriebenen ersten Verschlussteil (5), welches bei seiner Öffnungsbewegung an dem abhängig angetriebenen zweiten Verschlussteil (6) zur Anlage kommt, dieses gleichfalls in die Offenstellung überführt, mit Ventilstangen (5a, 6a) für die Verschlussteile (5, 6), die einseitig durch ein zugeordnetes zweites Ventilgehäuseteil (1b) hindurch- und aus diesem herausgeführt sind, mit der als Hohlstange (6a) ausgebildeten Ventilstange für das zweite Verschlussteil (6), innerhalb der eine mit dieser verbundene innere Hohlstange (6c) angeordnet ist, wobei die Hohlstange (6a) in einen Innenraum (4a) eines mit der Umgebung verbundenen Ablaufgehäuses (4) hineingeführt ist, welches sich an das von der Hohlstange (6a) durchdrungene zweite Ventilgehäuseteil (1b) anschließt, wobei die Hohlstange (6a) im Durchdringungsbereich mit dem zweiten Ventilgehäuseteil (1b) als Druckausgleichkolben (6b) ausgebildet ist, mit einem zwischen den Hohlstangen (6a, 6c) vorgesehenen Verbindungsweg (6e, 6f), der vom Leckagehohlraum (3) zum Innenraum (4a) führt, und mit der in der inneren Hohlstange (6c) angeordneten, das erste Verschlussteil (5) mit einem Ventilantrieb (20) verbindenden Ventilstange (5a),
**dadurch gekennzeichnet,**
• **dass** die Hohlstange (6a) im Bereich zwischen dem zweiten Verschlussteil (6) und dem Druckausgleichkolben (6b) eingeschnürt ist,
• und **dass** der Verbindungsweg (6e, 6f), ausgehend vom Leckagehohlraum (3), am Umfang des Druckausgleichkolbens (6b) und im Innenraum (4a) des Ablaufgehäuses (4) ausmündet.

2. Doppelsitzventil nach Anspruch 1,
**dadurch gekennzeichnet,**
**dass** der Druckausgleichkolben (6b) annähernd einen dem Durchtrittsquerschnitt (AN) zwischen den Ventilgehäuseteilen (1a, 1b) entsprechenden Balancerquerschnitt (A_{B}) aufweist.

3. Doppelsitzventil nach Anspruch 1 oder 2,
**dadurch gekennzeichnet,**
**dass** die Hohlstange (6a) im Bereich zwischen dem zweiten Verschlussteil (6) und dem Druckausgleichkolben (6b) auf einen den Festigkeitserfordernissen entsprechenden Mindestquerschnitt (a_{M}) eingeschnürt ist.

4. Doppelsitzventil nach einem der Ansprüche 1 bis 3,
**dadurch gekennzeichnet,**
**dass** der Verbindungsweg (6e, 6f) von einem ersten Abschnitt (6e) und einem sich anschließenden zweiten Abschnitt (6f) gebildet wird, und dass sich der erste Abschnitt (6e) innerhalb eines durch die Hohlstange (6a) vorgegebenen Bereichs überwiegend axial und der zweite Abschnitt (6f) überwiegend radial erstrecken.

5. Doppelsitzventil nach Anspruch 4,
**dadurch gekennzeichnet,**
**dass** der zweite Abschnitt (6f) auf Seiten der inneren Hohlstange (6c) von einem an dieser angeformten, umlaufenden radialen Vorsprung (6g) berandet wird.

6. Doppelsitzventil nach Anspruch 5,
**dadurch gekennzeichnet,**
**dass** die Verbindung der Hohlstange (6a, 6b) mit der inneren Hohlstange (6c, 6g) mittels am Umfang des Druckausgleichkolbens (6b) angeordnete, den Austrittsbereich des zweiten Abschnittes (6f) bis zum äußeren Ende des radialen Vorsprungs (6g) überbrückende Verbindungsstege (6d) erfolgt.

7. Doppelsitzventil nach Anspruch 6,
**dadurch gekennzeichnet,**
**dass** die Verbindungsstege (6d) gleichmäßig über den Umfang des Druckausgleichkolbens (6b) verteilt angeordnet und im Wesentlichen axial orientiert sind.

8. Doppelsitzventil nach Anspruch 6 oder 7,
**dadurch gekennzeichnet,**
**dass** drei Verbindungsstege (6d) vorgesehen sind.

9. Doppelsitzventil nach einem der Ansprüche 6 bis 8,
**dadurch gekennzeichnet,**
**dass** sich die Verbindungsstege (6d), insgesamt gesehen, über 35 bis 40 Prozent des Umfangs des Druckausgleichkolbens (6b) erstrecken.

10. Doppelsitzventil nach einem der Ansprüche 5 bis 9,
**dadurch gekennzeichnet,**
**dass** der radiale Vorsprung (6g) in radialer Richtung derart bemessen ist, dass zwischen ihm und einer umschließenden inneren Umfangsfläche (4c) des Innenraumes (4a) ein zu letzterem hinführender Abflussringspalt (6h) gebildet wird.

11. Doppelsitzventil nach einem der Ansprüche 1 bis 10,
**dadurch gekennzeichnet,**
**dass** die innere Hohlstange (6c) aus dem Ablaufgehäuse (4) herausgeführt und ein zwischen der inneren Hohlstange (6c) und der Ventilstange (5a) gebildeter Ringspalt (7) außerhalb des Ablaufgehäuses (4) in der Umgebung des Ventils mit einem Anschluss (19) für die Zufuhr eines dritten Reinigungsmittelstromes (R3) ausgestattet ist.

12. Doppelsitzventil nach einem der Ansprüche 1 bis 11,
**dadurch gekennzeichnet,**
**dass** das erste Verschlussteil (5) über die Ventilstange (5a) mit einem ersten Einzelverstellkolben (20.2a) in einem zweiten Antriebsteil (20.2) des Ventilantriebs (20) verbunden ist.

13. Doppelsitzventil nach einem der Ansprüche 1 bis 12,
**dadurch gekennzeichnet,**
**dass** die innere Hohlstange (6c) bis in den Ventilantrieb (20) verlängert und dort mit einem zweiten Einzelverstellkolben (20.2b) in dem zweiten Antriebsteil (20.2) in einen Verstelleingriff zu bringen ist.

## Claims

1. A double-seated valve including two closure elements (5, 6) which are serially disposed and movable relative to each other and, in both the opened and closed positions of the valve, delimit a leakage cavity (3) which is connected to the surroundings of the valve, including the independently driven first closure element (5) which when carrying out its opening motion comes to bear on the dependently driven second closure element (6) while also moving it over to the opened position, with valve rods (5a, 6a) for the closure elements (5, 6) which are passed, on one side, through and out of an associated second valve casing component (1b), including the valve rod configured as a hollow rod (6a) for the second closure element (6) within which an inner hollow rod (6c) is disposed and connected thereto, wherein the hollow rod (6a) is passed into an interior (4a) of a discharge casing (4) connected to the surroundings which joins the second valve casing element (1b) traversed by the hollow rod (6a), wherein the hollow rod (6a), in the traversed area, is configured, with the second valve casing component (1b), as a pressure-compensating piston (6b), including a connection path (6e, 6f) provided between the hollow rods (6a, 6c) which leads to the interior (4a) from the leakage cavity (3), and including a valve rod (5a) disposed in the inner hollow rod (6c) and connecting the first closure element (5) to a valve drive (20),
**characterized in that**
• the hollow rod (6a) is necked down in the area between the second closure element (6) and the pressure-compensating piston (6b),
• and the connection path (6e, 6f), starting from the leakage cavity (3), opens out at the circumference of the pressure-compensating piston (6b) and in the interior (4a) of the discharge casing (4).

2. The double-seated valve according to claim 1,
**characterized in that**
the pressure-compensating piston (6b) has a balancer cross-section (A_{B}) which approximately matches the exit cross-section (A_{N}) between the valve casing components (1a, 1b).

3. The double-seated valve according to claim 1 or 2,
**characterized in that**
the hollow rod (6a) is necked down, in the area between the second closure element (6) and the pressure-compensating piston (6b), to a minimum cross-section (a_{M}) corresponding to the strength requirements.

4. The double-seated valve according to any one of claims 1 to 3,
**characterized in that**
the connection path (6e, 6f) is defined by a first portion (6e) and a second portion (6f) joining it, and that the first portion (6e) predominantly extends axially within an area predetermined by the hollow rod (6a), and the second portion (6f) predominantly extends radially.

5. The double-seated valve according to claim 4,
**characterized in that**
the second portion (6f) is bordered, on the sides of the inner hollow rod (6c), by a radial protrusion (6g) which is formed thereto and runs on it circumferentially.

6. The double-seated valve according to claim 5,
**characterized in that**
the hollow rod (6a, 6b) is connected to the inner hollow rod (6c, 6g) by means of connection webs (6d) disposed at the circumference of the pressure-compensating piston (6b) and bridging over the exit area of the second portion (6f) up to the outermost end of the radial protrusion (6g).

7. The double-seated valve according to claim 6,
**characterized in that**
the connection webs (6d) are evenly spaced along the circumference of the pressure-compensating piston (6b) and are substantially oriented axially.

8. The double-seated valve according to claim 6 or 7,
**characterized in that**
three connection webs (6d) are provided.

9. The double-seated valve according to any one of claims 6 to 8,
**characterized in that**
the connection webs (6d), as seen altogether, extend over 35 to 40 per cent of the circumference of the pressure-compensating piston (6b).

10. The double-seated valve according to any one of claims 5 to 9,
**characterized in that**
the radial protrusion (6g) is dimensioned in a radial direction in a way to form an annular drainage gap (6h) leading to the interior (4a) between said protrusion and an enclosing inner circumferential area (4c) of said interior.

11. The double-seated valve according to any one of claims 1 to 10,
**characterized in that**
the inner hollow rod (6c) is led out of the discharge casing (4) and an annular gap (7) defined between the inner hollow rod (6c) and the valve rod (5a) is equipped with a fitting (19) for the supply of a third cleaner flow (R3) outside the discharge casing (4) in the vicinity of the valve.

12. The double-seated valve according to any one of claims 1 to 11,
**characterized in that**
the first closure element (5) is connected to a first individually adjustable piston (20.2a), via the valve rod (5a), in a second driving component (20.2) of the valve drive (20).

13. The double-seated valve according to any one of claims 1 to 12,
**characterized in that**
the inner hollow rod (6c) is extended in length into the valve drive (20) and can be brought into an adjustable engagement there with a second individually adjustable piston (20.2b) in the second driving component (20.2).

## Revendications

1. Soupape à siège double, avec deux parties de fermeture (5, 6) mobiles l'une par rapport à l'autre, disposées en série, qui, aussi bien dans la position de fermeture que dans la position d'ouverture de la soupape, délimitent une cavité de fuite (3) qui est raccordée à l'environnement de la soupape, avec la première partie de fermeture (5) entraînée de façon indépendante qui, lors de son mouvement d'ouverture, vient buter contre la deuxième partie de fermeture (6) entraînée de façon dépendante, amène également celle-ci dans la position d'ouverture, avec des tiges de soupape (5a, 6a) pour les parties de fermeture (5, 6) qui sont conduites sur un côté à travers une deuxième partie de carter de soupape (1b) affectée et extraites de celle-ci, avec la tige de soupape, constituée en tant que tige creuse (6a), pour la deuxième partie de fermeture (6), à l'intérieur de laquelle est disposée une tige creuse intérieure (6c) reliée à celle-ci, la tige creuse (6a) étant introduite dans un espace intérieur (4a) d'un carter d'évacuation (4) raccordé à l'environnement, carter qui se raccorde à la deuxième partie de carter de soupape (1b) pénétrée par la tige creuse (6a), la tige creuse (6a) étant, dans la zone de pénétration, constituée de la deuxième partie de carter de soupape (1b) en tant que piston d'équilibrage de pression (6b), avec une voie de raccordement (6e, 6f) prévue entre les tiges creuses (6a, 6c), voie qui conduit de la cavité de fuite (3) à l'espace intérieur (4a), et avec la tige de soupape (5a) disposée dans la tige creuse intérieure (6c) et raccordant la première partie de fermeture (5) à un entraînement de soupape (20),
**caractérisée en** se que
• la tige creuse (6a) est rétrécie dans la zone entre la deuxième partie de fermeture (6) et le piston d'équilibrage de pression (6b),
• et en ce que la voie de raccordement (6e, 6f), en partant de la cavité de fuite (3), débouche sur la périphérie du piston d'équilibrage de pression (6b) et dans l'espace intérieur (4a) du carter d'évacuation (4).

2. Soupape à siège double selon la revendication 1,
**caractérisée en ce que**
le piston d'équilibrage de pression (6b) présente approximativement une section de balancier (A_{B}) correspondant à la section de traversée (A_{N}) entre les parties de carter de soupape (1a, 1b).

3. Soupape à siège double selon la revendication 1 ou 2,
**caractérisée en ce que**
la tige creuse (6a), dans la zone entre la deuxième partie de fermeture (6) et le piston d'équilibrage de pression (6b), est rétrécie jusqu'à une section minimale (a_{M}) correspondant aux exigences de solidité.

4. Soupape à siège double selon une des revendications 1 à 3,
**caractérisée en ce que**
la voie de raccordement (6e, 6f) est formée d'un premier tronçon (6e) et d'un deuxième tronçon (6f) qui se raccorde, et **en ce que** le premier tronçon (6e) s'étend d'une façon principalement axiale à l'intérieur d'une zone prédéfinie par la tige creuse (6a), et le deuxième tronçon (6f) s'étend d'une façon principalement radiale.

5. Soupape à siège double selon la revendication 4,
**caractérisée en ce que**
le deuxième tronçon (6f) est, sur des côtés de la tige creuse intérieure (6c), bordé d'une saillie radiale (6g) périphérique conformée sur la tige creuse.

6. Soupape à siège double selon la revendication 5,
**caractérisée en ce que**
le raccordement de la tige creuse (6a, 6b) à la tige creuse intérieure (6c, 6g) s'effectue au moyen de nervures de raccordement (6d) disposées sur la périphérie du piston d'équilibrage de pression (6b) et enjambant la zone de sortie du deuxième tronçon (6f) jusqu'à l'extrémité extérieure de la saillie radiale (6g).

7. Soupape à siège double selon la revendication 6,
**caractérisée en ce que**
les nervures de raccordement (6d) sont disposées réparties régulièrement sur la périphérie du piston d'équilibrage de pression (6b) et sont orientées essentiellement de façon axiale.

8. Soupape à siège double selon la revendication 6 ou 7,
**caractérisée en ce que**
trois nervures de raccordement (6d) sont prévues.

9. Soupape à siège double selon une des revendications 6 à 8,
**caractérisée en ce que**
les nervures de raccordement (6d) s'étendent, vues dans leur ensemble, sur 35 à 40 pour cent de la périphérie du piston d'équilibrage de pression (6b).

10. Soupape à siège double selon une des revendications 5 à 9,
**caractérisée en ce que**
la saillie radiale (6g) est, dans la direction radiale, dimensionnée de sorte que, entre elle et une surface périphérique (4c) englobante de l'espace intérieur (4a), il est formé un interstice annulaire d'écoulement (6h) conduisant à cet espace.

11. Soupape à siège double selon une des revendications 1 à 10,
**caractérisée en ce que**
la tige creuse intérieure (6c) est guidée hors du carter d'évacuation (4) et **en ce qu'**un interstice annulaire (7), formé entre la tige creuse intérieure (6c) et la tige de soupape (5a), à l'extérieur du carter d'évacuation (4), dans l'environnement de la soupape, est équipé d'un raccord (19) pour l'amenée d'un troisième flux de produit de nettoyage (R3).

12. Soupape à siège double selon une des revendications 1 à 11,
**caractérisée en ce que**
la première partie de fermeture (5) est raccordée, via la tige de soupape (5a), à un premier piston de réglage individuel (20.2a) dans une deuxième partie d'entraînement (20.2) de l'entraînement de soupape (20).

13. Soupape à siège double selon une des revendications 1 à 12,
**caractérisée en ce que**
la tige creuse intérieure (6c) est prolongée jusque dans l'entraînement de soupape (20) et doit y être placée en engrènement de réglage avec un deuxième piston de réglage individuel (20.2b) dans la deuxième partie d'entraînement (20.2).
